# FASCICULE DE BREVET EUROPEEN

(11) **EP 0 881 370 B1**
(45) Date de publication et mention de la délivrance du brevet: **28.11.2001**
(21) Numéro de dépôt: 98401115.5
(22) Date de dépôt: 07.05.1998
(51) Int. Cl.: F02B 23/10

(54) **Nouvel arrangement d'un moteur à combustion interne à 4 temps, allumage commande et injection directe**
Neue Anordnung für eine fremdgezündete, direkteinspritzende Viertaktbrennkraftmaschine
New arrangement for a four stroke, spark ignited and direct injected internal combustion engine

(30) Priorité: 29.05.1997 FR 9706731
(43) Date de publication de la demande: 02.12.1998
(73) Titulaire: INSTITUT FRANCAIS DU PETROLE, 92852 Rueil-Malmaison Cedex (FR)
(72) Inventeur: Monnier, Gaetan, 78955 Carrières sous Poissy (FR)
(74) Mandataire: Andréeff, François

(56) Documents cités:
- EP-A- 0 412 009
- EP-A- 0 558 072
- US-A- 2 483 288
- US-A- 4 641 617

## Description

La présente invention concerne le domaine des moteurs à combustion interne à 4 temps, à allumage commandé et particulièrement à injection directe de carburant dans la chambre de combustion.

Dans ce type de moteurs, l'injection de carburant a lieu directement dans la chambre de combustion et non pas, comme dans les autres moteurs, dans le ou les conduit(s) d'admission. L'injection directe de carburant permet de mieux maîtriser la combustion dans la mesure où les injecteurs peuvent réagir et être commandés au niveau du cycle moteur.

De nombreuses conceptions de moteurs ont déjà été faites dans ce sens. Ainsi on connaît des moteurs à 4 temps et à allumage commandé ayant 4 soupapes par cylindre, une bougie placée dans la culasse sur l'axe longitudinal du cylindre ayant des conditions d'admission orientées et débouchant sensiblement parallèlement à l'axe du cylindre, et dans lesquels l'injecteur de carburant débouche juste en dessous des soupapes d'admission.

On connaît aussi des moteurs de même type mais où les conduits d'admission sont orientés de façon à produire un mouvement des gaz autour de l'axe du cylindre (mouvement dit de SWIRL).

Le piston associé à ces moteurs présente couramment un évidement de forme spécifique destiné à orienter et renforcer le mouvement des gaz dans la chambre de combustion.

On connaît encore des moteurs dont le piston présente un bol (ou évidement) sphérique disposé, au point mort haut, juste en face de l'injection de carburant et de la bougie d'allumage.

Tous ces moteurs présentent de grosses cylindrées (alésages plutôt supérieurs à 80 mm) et ont tous au moins quatre soupapes par cylindre.

Ils permettent une combustion en mode stratifié à faible charge et/ou une combustion dite homogène à fortes charges.

La combustion est dite stratifiée quand une zone de la chambre de combustion contient un mélange plus riche que le reste de la chambre, à faible charge. Ceci permet d'enflammer plus facilement le mélange puisque la zone enrichie se trouve globalement à proximité de la bougie.

A fortes charges, la combustion dite homogène est préconisée. Il s'agit alors d'avoir un mélange très homogène dans toute la chambre de combustion.

Actuellement, les moteurs à injection directe fonctionnent correctement soit dans un mode, soit dans l'autre. Il est généralement difficile de concilier les deux modes de fonctionnement.

La présente invention concerne le type de moteurs qui vient d'être décrit et elle permet de résoudre certains des problèmes associés.

Plus précisément la présente invention permet une réduction de la consommation de carburant, grâce à une diminution du travail de pompage. De plus, les transferts thermiques dans et autour de la chambre de combustion sont largement réduits selon la présente invention.

De façon spécifique, la présente invention concerne des moteurs à injection directe, à combustion stratifiée, ayant des cylindres de petites dimensions.

Ainsi la présente invention a pour objet un moteur à combustion interne à 4 temps à allumage commandé et à injection directe de carburant, comprenant au moins une chambre de combustion délimitée par un piston, un cylindre et une culasse, plusieurs conduits d'admission associés chacun à un élément d'admission, un conduit d'échappement avec lequel coopère une soupape d'échappement, un moyen d'allumage disposé à proximité des soupapes d'admission, la face supérieure du piston présentant un profil proche de celui de la face inférieure de la culasse et ledit piston présentant un évidement disposé à proximité de la région où débouche l'élément d'allumage. Un tel moteur est décrit dans EP-A- 558 072.

Selon l'invention, le moteur comprend en outre un élément d'injection de carburant placé à proximité dudit moyen d'allumage, l'un au moins desdits éléments d'admission présente un axe longitudinal proche de l'axe longitudinal du cylindre.

De façon particulière, l'élément d'injection de carburant est disposé en dessous dudit moyen d'allumage.

En outre, les conduits d'admission sont disposés et débouchent symétriquement vis-à-vis d'un plan de symétrie qui contient en outre l'axe longitudinal du conduit d'échappement.

Avantageusement, le moyen d'allumage peut être placé sur ou à proximité du plan de symétrie.

Par ailleurs, l'élément d'injection est disposé sur ou à proximité immédiate du plan de symétrie.

Sans sortir du cadre de l'invention, l'évidement dans le piston présente une forme sphérique ou semi-sphérique.

D'autres caractéristiques, avantages, détails de l'invention apparaîtront mieux à la lecture de la description qui va suivre, faite à titre illustratif et nullement limitatif, en référence aux figures annexées sur lesquelles :
- la figure 1 est une coupe longitudinale simplifiée d'un mode de réalisation de l'invention; et
- la figure 2 est une vue éclatée en perspective de la culasse et de la partie supérieure de la chambre de combustion.

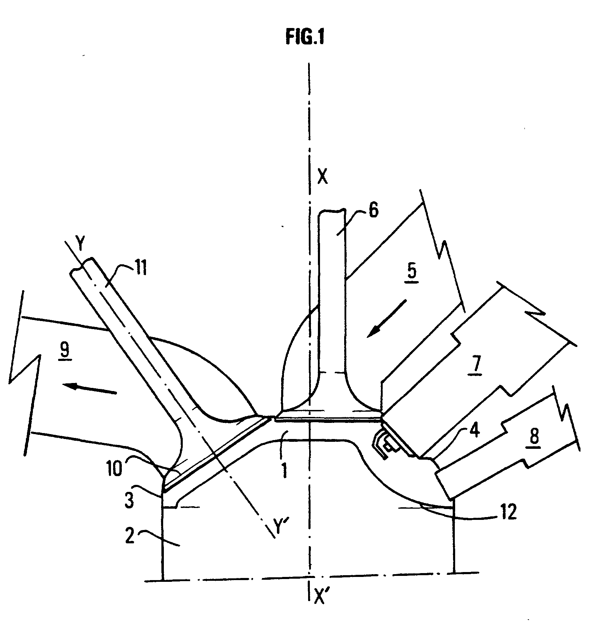

Sur la figure 1, la partie supérieure, côté culasse, d'un cylindre selon l'invention est schématisée en coupe longitudinale.

Les éléments nécessaires à l'invention y sont ainsi représentés : la chambre de combustion 1 est délimitée de façon connue en soit, par la face supérieure du piston 2, le cylindre 3 et la culasse 4.

Les conduits d'admission 5 sont au nombre de deux, un seul apparaissant sur la coupe de la figure 1. Les axes des soupapes d'admission 6 sont sensiblement parallèles à l'axe longitudinal du cylindre XX'. Les deux conduits d'admission sont disposés et débouchent préférentiellement symétriquement par rapport à un plan dit "plan médian" (le plan de coupe de la figure 1).

Dans ce plan ou à proximité sont placés un moyen d'allumage tel une bougie 7 et un injecteur de carburant 8. Ces deux éléments sont préférentiellement disposés sous les conduits d'admission 5, si l'on considère que le "dessus" du cylindre se trouve coté culasse et le "dessous" côté carter. La bougie 7 se trouve plutôt au-dessus de l'élément d'injection 8, soit plus près des conduits 5 et lumières d'admission, ainsi que du centre de la chambre de combustion.

Pour l'échappement, le conduit 9, la lumière 10 et la soupape 11 se trouvent dans ou autour du plan médian, du coté opposé à l'admission. L'axe YY' du conduit 9 et celui de la soupape 11 sont confondus à proximité du cylindre ; cet axe YY' est plutôt incliné par rapport à celui du cylindre XX'.

En outre, la face supérieure du piston 2 présente un profil proche de celui de la face inférieure de la culasse 4; de façon à ce qu'au point mort haut, un jeu (ou garde) de quelques millimètres seulement existe entre ces deux surfaces.

Par ailleurs, à proximité de la région de la chambre 1 où débouchent à la fois la bougie 7 et l'injecteur 8, le piston 2 présente un évidement 12 destiné à améliorer l'aérodynamique interne des gaz à l'intérieur de la chambre de combustion 1.

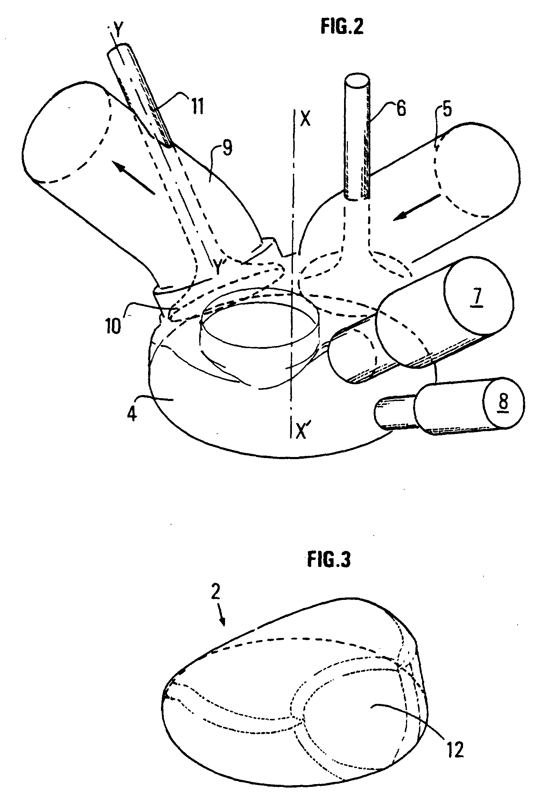

La figure 2 illustre plus en détail l'arrangement qui vient d'être décrit. Sur cet éclaté, seule une admission (conduit 5, soupape 6 et lumière non référencée) a été schématisée.

Il apparaît clairement que la bougie 7 et l'injecteur 8 se trouvent dans le plan médian, et que les admissions sont situées de part et d'autre de ce plan.

La figure 2 fait également apparaître que le piston 2 présente, coté bougie 7 et injecteur 8, un évidement 12.

La disposition selon l'invention, qui vient d'être décrite, permet une réelle amélioration du mouvement des gaz à l'intérieur de la chambre de combustion 1, notamment avec des petits cylindres où l'encombrement est une contrainte réelle. Cet arrangement permet au gaz frais de pénétrer facilement et directement à l'intérieur de la chambre de combustion et d'y être bien mélangé avec la carburant injecté à proximité, juste en dessous.

On améliore donc ainsi la perméabilité d'un cylindre à trois soupapes.

L'injecteur 8 étant situé dans le plan médian, le jet produit ne vient se briser sur aucune paroi ; il peut s'épanouir et s'élargir sans problème. Ceci est favorable en fonctionnement homogène, où le carburant doit être bien réparti, dans tout le volume de la chambre 1

Dans le cas d'un fonctionnement en combustion stratifiée, le jet d'injection peut être projeté sur le piston 2 pour produire la stratification du carburant au voisinage de la bougie 7.

De façon particulièrement avantageuse, la bougie 7, l'injecteur 8 et les conduits d'admission 5 sont placés vers l'avant du véhicule, en vue d'un démontage rapide et aisé.

De plus, l'injecteur 8 n'est pas disposé en face de la bougie 7, ce qui augmente la durée de vie et la tenue de ces deux composants.

## Revendications

1. Moteur à combustion interne à 4 temps à allumage commandé et à injection directe comprenant au moins une chambre de combustion (1) délimitée par un piston (2), un cylindre (3) et une culasse (4), plusieurs conduits d'admission (5) associés chacun à un élément d'admission (6), un conduit d'échappement (9) avec lequel coopère une soupape d'échappement (11), un moyen d'allumage (7) disposé à proximité des soupapes d'admission (6), la face supérieure du piston (2) présentant un profil proche de celui de la face inférieure de la culasse (4) et ledit piston (2) présentant un évidement (12) disposé à proximité de la région où débouche l'élément d'allumage (7), **caractérisé en ce qu'**il comprend en outre un élément d'injection de carburant (8) placé à proximité dudit moyen d'allumage (7), et **en ce que** l'un desdits éléments d'admission (6) présente un axe longitudinal proche de l'axe longitudinal du cylindre (XX').

2. Moteur selon la revendication 1, **caractérisé en ce que** l'élément d'injection de carburant (8) est disposé en dessous dudit moyen d'allumage (7).

3. Moteur selon l'une quelconque des revendications précédentes, **caractérisé en ce que** les conduits d'admission (5) sont disposés et débouchent symétriquement vis-à-vis d'un plan de symétrie qui contient en outre l'axe longitudinal (YY') du conduit d'échappement (9).

4. Moteur selon la revendication 3, **caractérisé en ce que** le moyen d'allumage (7) est disposé sur ou à proximité immédiate du plan de symétrie.

5. Moteur selon l'une quelconque des revendications 3 ou 4, **caractérisé en ce que** l'élément d'injection (8) est disposé sur ou à proximité immédiate du plan de symétrie.

6. Moteur selon l'une quelconque des revendications précédentes, **caractérisé en ce que** l'évidement (12) dans le piston présente une forme sphérique ou semi-sphérique.

## Patentansprüche

1. Viertaktbrennkraftmaschine mit gesteuerter Zündung und direkter Einspritzung, umfassend: wenigstens eine Brennkammer (1), die durch einen Kolben (2) und einen Zylinder (3) und einen Zylinderdeckel (4) begrenzt ist, mehrere Einlassleitungen (5), die jeweils einem Einlasselement (6) zugeordnet sind, eine Auslassleitung (9), mit der ein Auslassventil (11) zusammenwirkt, ein Zündmittel (7), das benachbart den Einlassventilen (6) angeordnet ist, wobei die Oberseite des Kolbens (2) ein Profil nahe dem der Unterseite des Zylinderdeckels (4) aufweist und dieser Kolben (2) über eine Ausnehmung (12) verfügt, die benachbart dem Bereich angeordnet ist, wo das Zündelement (7) einmündet, **dadurch gekennzeichnet, dass** sie darüber hinaus ein Brennstoffeinspritzelement (8) umfasst, das benachbart diesem Zündmittel (7) angeordnet ist und dass eines der Einlasselemente (6) eine Längsachse nahe der Längsachse des Zylinders (XX') aufweist.

2. Brennkraftmaschine nach Anspruch 1, **dadurch gekennzeichnet, dass** das Kraftstoffeinspritzelement (8) unterhalb dieses Zündmittels (7) angeordnet ist.

3. Brennkraftmaschine nach einem der vorhergehenden Ansprüche, **dadurch gekennzeichnet, dass** die Einlassleitungen (5) angeordnet sind und symmetrisch münden bezüglich einer Symmetrieebene, die im übrigen die Längsachse (YY') der Auslassleitung (9) enthält.

4. Brennkraftmaschine nach Anspruch 3, **dadurch gekennzeichnet, dass** das Zündmittel (7) auf oder unmittelbar benachbart der Symmetrieebene angeordnet ist.

5. Brennkraftmaschine nach einem der Ansprüche 3 oder 4, **dadurch gekennzeichnet, dass** das Injektionselement (8) auf oder unmittelbar benachbart der Symmetrieebene angeordnet ist.

6. Brennkraftmaschine nach einem der vorhergehenden Ansprüche, **dadurch gekennzeichnet, dass** die Ausnehmung (12) im Kolben eine kugelförmige oder halbkugelförmige Gestalt hat.

## Claims

1. Four-stroke internal combustion engine with spark ignition and direct fuel injection comprising at least one combustion chamber (1) delimited by a piston (2), a cylinder (3) and a cylinder head (4), a plurality of intake passages (5) each associated with an intake element (6), an exhaust passage (9) with which an exhaust valve (11) co-operates, an ignition means (7) disposed close to the intake valves (6), the upper face of the piston (2) exhibiting a profile close to that of the lower face of the cylinder head (4), and said piston (2) exhibiting a recess (12) disposed close to the region in which the ignition element (7) debouches, **characterised in that** it additionally comprises a fuel injection element (8) placed close to said ignition means (7), and **in that** one of said intake elements (6) exhibits a longitudinal axis close to the longitudinal axis of the cylinder (XX').

2. Engine according to claim 1, **characterised in that** the fuel injection element (8) is disposed below said ignition means (7).

3. Engine according to any one of the preceding claims, **characterised in that** the intake passages (5) are disposed and debouch symmetrically with respect to a plane of symmetry which additionally contains the longitudinal axis (YY') of the exhaust passage (9).

4. Engine according to claim 3, **characterised in that** the ignition means (7) is disposed on or in the immediate vicinity of the plane of symmetry.

5. Engine according to any one of claims 3 or 4, **characterised in that** the injection element (8) is disposed on or in the immediate vicinity of the plane of symmetry.

6. Engine according to any one of the preceding claims, **characterised in that** the recess (12) in the piston exhibits a spherical or hemispherical shape.
